(19) **Europäisches Patentamt**
**European Patent Office**
**Office européen des brevets**

(11) **EP 4 364 985 A1**

(12) **EUROPEAN PATENT APPLICATION**
published in accordance with Art. 153(4) EPC

(43) Date of publication:
**08.05.2024   Bulletin 2024/19**

(21) Application number: **22833050.2**

(22) Date of filing: **24.06.2022**

(51) International Patent Classification (IPC):
**B60J 1/00** [(2006.01)]          **B60J 1/02** [(2006.01)]
**G02B 27/01** [(2006.01)]

(52) Cooperative Patent Classification (CPC):
**B60J 1/00; B60J 1/02; G02B 27/01**

(86) International application number:
**PCT/JP2022/025397**

(87) International publication number:
**WO 2023/276903 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **30.06.2021   JP 2021109773**

(71) Applicant: **NIPPON SHEET GLASS COMPANY,
LIMITED
Tokyo 108-6321 (JP)**

(72) Inventors:
• **OGAWA, Ryohei
Tokyo 108-6321 (JP)**
• **ASAOKA, Hisashi
Tokyo 108-6321 (JP)**

(74) Representative: **Hasegawa, Kan
Patentanwaltskanzlei Hasegawa
Untere Hauptstraße 56
85354 Freising (DE)**

(54)   **WINDSHIELD**

(57)   A windshield according to the present invention is provided with an HUD device capable of vertically switching a plurality of display regions, said windshield comprising a glass plate which has a first main surface and a second main surface opposite from the first main surface and in which the display regions are formed, wherein: the glass plate is configured such that the upper end portion is formed so as to have a greater thickness than the lower end portion, and thereby the first main surface and the second main surface form a wedge angle $\alpha$; and S_Center < S_Upper and S_Center < S_Lower are satisfied, where Y is the vertical height in the entire display region including all the plurality of display regions, S_Center is the range of the wedge angle $\alpha$ in a first region between a line 0.15 Y upward away and a line 0.15 Y downward away from a line passing through the vertical center of both sides of the entire display region, SUpper is the range of the wedge angle $\alpha$ in a second region between the upper side of the entire display region and a line 0.3 Y downward away from said upper side, and S_Lower is the range of the wedge angle $\alpha$ in a third region between the lower side of the entire display region and a line 0.3 Y upward away from said lower side.

FIG. 14

**Description**

TECHNICAL FIELD

The present invention relates to a windshield.

BACKGROUND ART

A windshield in which a head-up display (HUD) device is used is formed in a wedge shape in order to prevent a double image. Patent Document 1 proposes a windshield in which a plurality of lattice points are defined in a display region by an HUD device projected onto the windshield, and a difference between a maximum value and a minimum value of a wedge angle is 0.32 mrad or less when the wedge angle at each lattice point is measured. As a result, it is possible to suppress the generation of the double image even when the display region is enlarged.

PRIOR ART DOCUMENT

PATENT DOCUMENT

Patent Document 1: Japanese Patent No. 6770470

SUMMARY OF THE INVENTION

PROBLEMS TO BE SOLVED BY THE INVENTION

In recent years, the HUD device capable of switching the display region in a vertical direction in accordance with a position of an eye line of a driver has been proposed. As a result of examination by the present inventor, it has been found that when the display region moves in the vertical direction, an optimum wedge angle capable of suppressing the double image changes with the movement. Therefore, in order to suppress the double image in each display region, although it is necessary to set the wedge angle of the windshield so as to correspond to the change in optimum wedge angle, such a windshield is considered to be difficult to manufacture and has not yet been proposed. The present invention has been made to solve the above problems, and an object of the present invention is to provide a windshield that can be easily manufactured while suppressing a double image in all display regions when an HUD device capable of switching the display region in a vertical direction is used.

MEANS FOR SOLVING THE PROBLEM

Item 1. A windshield provided with an HUD device switching a plurality of display regions in a vertical direction, the windshield including a glass plate which has a first main surface and a second main surface opposite from the first main surface and in which the display region is formed, wherein the glass plate is configured such that an upper end portion is formed so as to have a greater thickness than a lower end portion, and the first main surface and the second main surface form a wedge angle $\alpha$; and S_Center < S_Upper and S_Center < S_Lower are satisfied, where Y is a vertical height in the entire display region including all the plurality of display regions, S_Center is a range of the wedge angle $\alpha$ in a first region between a line 0.15 Y upward away and a line 0.15 Y downward away from a line passing through a vertical center of both sides of the entire display region, S_Upper is a range of the wedge angle $\alpha$ in a second region between an upper side of the entire display region and a line 0.3 Y downward away from the upper side, and S_Lower is a range of the wedge angle $\alpha$ in a third region between a lower side of the entire display region and a line 0.3 Y upward away from the lower side.

Item 2. The windshield according to item 1, wherein the plurality of display regions overlap in a vertical direction.

Item 3. The windshield according to item 1 or 2, which is curved so as to be convex outward from a vehicle in a horizontal direction.

Item 4. The windshield according to item 3, further including a plurality of regions having different radii of curvature in the horizontal direction, wherein the display region is provided in a region having a large radius of curvature in the horizontal direction.

Item 5. The windshield according to any one of items 1 to 4, which is curved so as to be convex outward from the vehicle in the vertical direction.

Item 6. The windshield according to item 5, further including a plurality of regions having different radii of curvature in the vertical direction, wherein the display region is provided in a region having a large radius of curvature in the vertical direction.

ADVANTAGES OF THE INVENTION

According to the present invention, even when the HUD device capable of switching the display region in the vertical direction is used, a double image can be suppressed in all display regions.

BRIEF DESCRIPTION OF THE DRAWINGS

Fig. 1 is a plan view showing an embodiment of a windshield according to the present invention.
Fig. 2 is a cross-sectional view taken along line A-A of Fig. 1.
Fig. 3 is a cross-sectional view showing an example of a method of producing an interlayer film.
Fig. 4 is a plan view of Fig. 3.
Fig. 5 is a plan view of a molding die used for manufacturing the windshield.
Fig. 6 is a schematic view showing a manufacturing process of the windshield.
Fig. 7 is a cross-sectional view showing a HUD device and the windshield.
Fig. 8 is a cross-sectional view showing the HUD device and the windshield.
Fig. 9 is a front view showing three display regions by the HUD device.
Fig. 10 is a view showing a lattice used for measurement of a double image.
Fig. 11 is a graph showing an allowable wedge angle for suppressing the double image measured in an upper region.
Fig. 12 is a graph showing the allowable wedge angle for suppressing the double image measured in a central region.
Fig. 13 is a graph showing the allowable wedge angle for suppressing the double image measured in a lower region.
Fig. 14 is a graph showing the allowable wedge angles of three display regions.
Fig. 15 is a front view showing the three display regions.
Fig. 16 is a front view showing the three display regions.
Fig. 17 is a front view showing a position of the display region in the windshield.

EMBODIMENTS OF THE INVENTION

<1. Outline of windshield>

Hereinafter, an embodiment of a windshield of an automobile according to the present invention will be described with reference to the drawings. The windshield according to the present embodiment is used by an HUD (head-up display) device to project emitted light and display information.

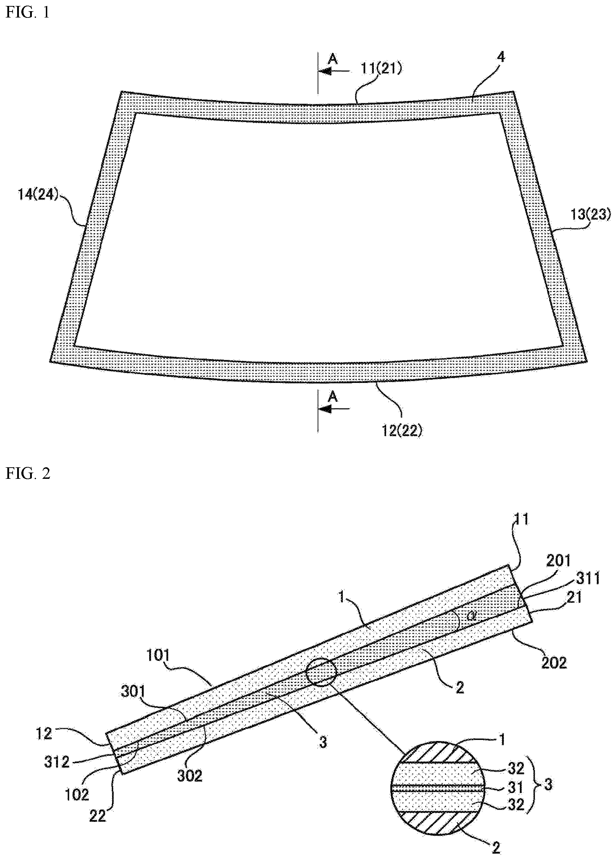

Fig. 1 is a front view of the windshield according to the present embodiment, and Fig. 2 is a cross-sectional view taken along line A-A of Fig. 1. As shown in Figs. 1 and 2, the windshield according to the present embodiment includes an outer glass plate 1 facing the outside of a vehicle, an inner glass plate 2 facing the inside of the vehicle, and an interlayer film 3 disposed between the glass plates 1 and 2 when the windshield is attached to the vehicle, and a cross section thereof is formed into a wedge shape (wedge angle $\alpha$) as a whole. A shielding layer 4 is stacked on the windshield. In each drawing of the present embodiment, the wedge angles exaggerated from the actual ones are shown for convenience of description. Each member will be hereinafter described.

<2. Outer glass plate and inner glass plate>

First, the outer glass plate 1 and the inner glass plate 2 will be described. As the outer glass plate 1 and the inner glass plate 2, known glass plates can be used, and the outer glass plate 1 and the inner glass plate 2 can also be formed of heat ray absorbing glass, general clear glass or green glass, or UV green glass. However, it is necessary for these glass plates 1 and 2 to realize a visible light transmittance conforming to safety standards of countries in which automobiles are used. An adjustment can be made so that the outer glass plate 1 ensures a required solar absorptance and the inner glass plate 2 provides the visible light transmittance that meets the safety standards, for example. An example of clear glass, an example of heat ray absorbing glass, and an example of soda-lime based glass are shown below.

(Clear glass)

$SiO_2$: 70 to 73 mass%

Al$_2$O$_3$: 0.6 to 2.4 mass%
CaO: 7 to 12 mass%
MgO: 1.0 to 4.5 mass%
R$_2$O: 13 to 15 mass% (R represents an alkali metal)
Total iron oxide (T-Fe$_2$O$_3$) in terms of Fe$_2$O$_3$: 0.08 to 0.14 mass%

(Heat ray absorbing glass)

With regard to the composition of heat ray absorbing glass, a composition obtained based on the composition of clear glass by setting the ratio of the total iron oxide (T-Fe$_2$O$_3$) in terms of Fe$_2$O$_3$ to 0.4 to 1.3 mass%, the ratio of CeO$_2$ to 0 to 2 mass%, and the ratio of TiO$_2$ to 0 to 0.5 mass%, and reducing the components (mainly SiO$_2$ and Al$_2$O$_3$) forming the framework of glass by an amount corresponding to the increases in T-Fe$_2$O$_3$, CeO$_2$, and TiO$_2$ can be used, for example.

(Soda-lime based glass)

SiO$_2$: 65 to 80 mass%
Al$_2$O$_3$: 0 to 5 mass%
CaO: 5 to 15 mass%
MgO: 2 mass% or more
NaO: 10 to 18 mass%
K$_2$O: 0 to 5 mass%
MgO + CaO: 5 to 15 mass%
Na$_2$O + K$_2$O: 10 to 20 mass%
SO$_3$: 0.05 to 0.3 mass%
B$_2$O$_3$: 0 to 5 mass%
Total iron oxide (T-Fe$_2$O$_3$) in terms of Fe$_2$O$_3$: 0.02 to 0.03 mass%

The outer glass plate 1 is formed in a trapezoidal shape and has an upper side (short side) 11, a lower side (long side) 12 longer than the upper side 11, a right side 13, and a left side 14, and when the outer glass plate 1 is attached to an automobile, the upper side 11 is disposed on the upper side, and the right side 13 and the left side 14 are respectively disposed on the right side and the left side when viewed from a vehicle interior side.

The inner glass plate 2 is similarly formed in a trapezoidal shape, and has an upper side 21, a lower side 22, a right side 23, and a left side 24. The inner glass plate 2 also has a first surface 201 facing the outside of the vehicle and a second surface 202 facing the inside of the vehicle, and has an end surface connecting the first surface 201 and the second surface 202. That is, in the present embodiment, both the outer glass plate 1 and the inner glass plate 2 are formed in a flat plate shape.

The interlayer film 3 is disposed between a second surface 102 of the outer glass plate 1 and the first surface 201 of the inner glass plate 2.

The thickness of the windshield according to the present embodiment is not particularly limited, and from the viewpoint of weight reduction, a total thickness of the outer glass plate 1 and the inner glass plate 2 is preferably 2.4 to 5.0 mm, more preferably 2.6 to 4.6 mm, and particularly preferably 2.7 to 3.2 mm. As described above, since it is necessary to reduce the total thickness of the outer glass plate 1 and the inner glass plate 2 in order to reduce the weight, the thickness of each of the glass plates 1 and 2 is not particularly limited, and for example, the thicknesses of the outer glass plate 1 and the inner glass plate 2 can be determined as follows.

The outer glass plate 1 is mainly required to have durability and impact resistance against external interference, and impact resistance performance against flying objects such as small stones is required. On the other hand, a larger thickness is not preferable because the weight increases. From this viewpoint, the thickness of the outer glass plate 1 is preferably 1.8 to 2.3 mm, and more preferably 1.9 to 2.1 mm. The thickness to be used can be determined in accordance with the application of glass.

Although the thickness of the inner glass plate 2 can be made equal to that of the outer glass plate 1, the thickness of the inner glass plate 2 can be made smaller than that of the outer glass plate 1 in order to reduce the weight of the windshield, for example. Specifically, when the strength of glass is taken into consideration, the thickness is preferably 0.1 to 2.3 mm, more preferably 0.8 to 2.0 mm, and particularly preferably 1.0 to 1.4 mm. Furthermore, the thickness is preferably 0.8 to 1.3 mm. With regard to the inner glass plate 2 as well, the thickness to be used can be determined in accordance with the application of glass.

The outer glass plate 1 and the inner glass plate 2 according to the present embodiment have curved shapes. That is, the glass plate is curved so as to protrude to the outside of the vehicle in a horizontal direction. In this curvature, the radius of curvature in the horizontal direction is not constant, and a plurality of regions having different radii of curvature are provided. For example, the radius of curvature at both ends of the windshield can be reduced, and the radius of curvature at the central portion can be increased.

Similarly, the windshield is curved so as to protrude to the outside of the vehicle also in a vertical direction. In this curvature, the radius of curvature in the vertical direction is not constant, and a plurality of regions having different radii of curvature are provided. For example, the radius of curvature of an upper portion of the windshield can be reduced, and the radius of curvature of a lower portion can be increased.

Here, an example of a method of measuring the thickness of the windshield will be described. First, the measurement positions are two upper and lower positions on a central line extending in the vertical direction at the center in the horizontal direction of the windshield. Although there is no particular limitation on the measuring apparatus, a thickness gauge such as SM-112 manufactured by TECLOCK Corporation can be used, for example. During measurement, the windshield is disposed such that the curved surface of the windshield is placed on a flat surface, and an end portion of the windshield is sandwiched by and measured with the thickness gauge.

<3. Interlayer film>

The interlayer film 3 is formed in a trapezoidal shape similarly to the glass plates 1 and 2. As shown in Fig. 2, the interlayer film 3 also has a first surface 301 facing the outside of the vehicle and a second surface 302 facing the inside of the vehicle, and has an end surface connecting the first surface 301 and the second surface 302. In this case, the end surface on the upper side is referred to as an upper end surface 311, and the end surface on the lower side is referred to as a lower end surface 312. The interlayer film 3 is formed in a wedge shape in which the thickness decreases from the upper end surface 311 toward the lower end surface 312. The wedge angle $\alpha$ formed by the first surface 301 and the second surface 302 is not particularly limited, and may be, for example, 0.02 to 0.18 mrad, and further may be 0.05 to 0.15 mrad.

The interlayer film 3 is formed of at least one layer. As an example, as shown in the enlarged view of Fig. 2, the interlayer film 3 can be configured by three layers, namely a soft core layer 31 and outer layers 32 that are harder than the core layer 31 and between which the core layer 31 is sandwiched. However, there is no limitation to this configuration, and it is sufficient that the interlayer film 3 includes a plurality of layers including the core layer 31 and at least one outer layer 32 disposed on the outer glass plate 1 side. For example, the interlayer film 3 including two layers, namely the core layer 31 and one outer layer 32 disposed on the outer glass plate 1 side, the interlayer film 3 in which an even number of two or more of the outer layers 32 are arranged on each side of the core layer 31 so that the core layer 31 is disposed at the center, or the interlayer film 3 in which an odd number of outer layers 32 are disposed on one side of the core layer 31 and an even number of outer layers 32 are disposed on the other side so that the core layer 31 is interposed therebetween can also be formed. When only one outer layer 32 is provided, the outer layer 32 is provided on the outer glass plate 1 side as described above, which is for the purpose of improving breakage resistance performance with respect to an external force from the outside of a vehicle or a building. When the number of outer layers 32 is increased, sound insulation performance is improved.

There is no particular limitation on the hardness of the core layer 31 as long as the core layer 31 is softer than the outer layer 32. A material forming each of the layers 31 and 32 is not particularly limited, and for example, the outer layer 32 can be formed of a polyvinyl butyral resin (PVB). Polyvinyl butyral resin has excellent adhesiveness to the glass plates and penetration resistance and is thus preferable. On the other hand, the core layer 31 can be formed of, for example, an ethylene vinyl acetate resin (EVA) or a polyvinyl acetal resin, which is softer than the polyvinyl butyral resin constituting the outer layer. When the soft core layer is interposed between the outer layers, the sound insulation performance can be significantly improved while keeping adhesiveness and penetration resistance that are equivalent to those of a single-layered resin interlayer film.

In general, the hardness of a polyvinyl acetal resin can be controlled by adjusting (a) a degree of polymerization of polyvinyl alcohol, which is a starting material, (b) a degree of acetalization, (c) the type of plasticizer, (d) a ratio of the plasticizer to be added, and the like. Accordingly, a hard polyvinyl butyral resin that is used for the outer layer 32 and a soft polyvinyl butyral resin that is used for the core layer 31 can be produced even with the same polyvinyl butyral resin by suitably adjusting at least one condition selected from the aforementioned conditions. Furthermore, the hardness of a polyvinyl acetal resin can be controlled based on the type of aldehyde that is used for acetalization and whether co-acetalization using a plurality of kinds of aldehydes or pure acetalization using a single kind of aldehyde is performed. Although not necessarily applicable to every case, the larger the number of carbon atoms of the aldehyde that is used to obtain a polyvinyl acetal resin, the softer the resulting polyvinyl acetal resin tends to be. Accordingly, for example, if the outer layer 32 is formed of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer 31. There is no limitation to the above-mentioned resins and the like as long as predetermined Young's moduli can be obtained.

The total thickness of the interlayer film 3 is not particularly specified, and is preferably 0.3 to 6.0 mm, more preferably 0.5 to 4.0 mm, and particularly preferably 0.6 to 2.0 mm. The thickness of the core layer 31 is preferably 0.1 to 2.0 mm and more preferably 0.1 to 0.6 mm. Meanwhile, the thickness of each of the outer layers 32 is preferably 0.1 to 2.0 mm and more preferably 0.1 to 1.0 mm. Alternatively, it is also possible to fix the total thickness of the interlayer film 3 and adjust the thickness of the core layer 31 without exceeding the fixed total thickness. The above thickness is the thickness of the thickest portion of the interlayer film 3 formed in a wedge shape.

The thicknesses of the core layer 31 and the outer layer 32 can be measured, for example, as follows. First, the cross section of the windshield is enlarged by a factor of 175 and displayed using a microscope (e.g., VH-5500 manufactured by Keyence Corporation). Then, the thicknesses of the core layer 31 and the outer layer 32 are visually identified and measured. At this time, in order to eliminate variations seen in visual identification, the measurement is performed five times, and average values are taken as the thicknesses of the core layer 31 and the outer layer 32.

The total thickness of the interlayer film 3 is not particularly specified, and is preferably 0.3 to 6.0 mm, more preferably 0.5 to 4.0 mm, and particularly preferably 0.6 to 2.0 mm. The thickness of the core layer 31 is preferably 0.1 to 2.0 mm and more preferably 0.1 to 0.6 mm. Meanwhile, the thickness of each of the outer layers 32 is preferably larger than the thickness of the core layer 31, and specifically, is preferably 0.1 to 2.0 mm and more preferably 0.1 to 1.0 mm. Alternatively, it is also possible to fix the total thickness of the interlayer film 3 and adjust the thickness of the core layer 31 without exceeding the fixed total thickness.

The thicknesses of the core layer 31 and the outer layer 32 can be measured, for example, as follows. First, the cross section of the windshield is enlarged by a factor of 175 and displayed using a microscope (e.g., VH-5500 manufactured by Keyence Corporation). Then, the thicknesses of the core layer 31 and the outer layer 32 are visually identified and measured. At this time, in order to eliminate variations seen in visual identification, the measurement is performed five times, and average values are taken as the thicknesses of the core layer 31 and the outer layer 32. For example, an enlarged photograph of the windshield is taken, in which the core layer and the outer layer 32 have been identified, and the thicknesses are measured.

Although there is no particular limitation on the method of producing the interlayer film 3, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated with a pressing process, a lamination process, or the like. In the method of laminating with the pressing process, the lamination process, or the like, the resin film before laminating may have a single-layer structure or a multilayer structure. The interlayer film 3 may include a single layer instead of the plurality of layers as described above.

The interlayer film 3 according to the present embodiment is formed such that the lower side is elongated by stretching the interlayer film 3 having a rectangular shape in plan view after molding with a roller. Hereinafter, this treatment is referred to as a stretching treatment, and will be described in detail. The interlayer film before the stretching treatment is referred to as a pre-stretching interlayer film, and the interlayer film after the stretching treatment is referred to as a post-stretching interlayer film.

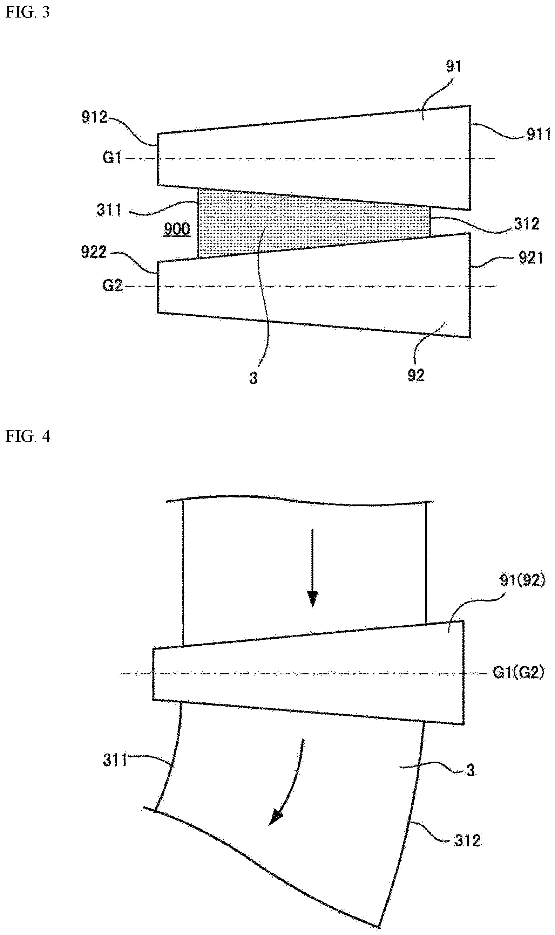

As shown in Fig. 3, the stretching treatment is performed by passing the pre-stretching interlayer film between two conical rollers 91 and 92. In this case, an upper roller is referred to as the first roller 91, and a lower roller is referred to as the second roller 92. Of each of the rollers 91 and 92, and axial end portion of the roller having a larger diameter is referred to as a first end portion 911, 921, and an axial end portion of the roller having a smaller diameter is referred to as a second end portion 912, 922. The first roller 91 and the second roller 92 are arranged such that rotation axes G1 and G2 are parallel to each other. The first end portions 911 and 921 and the second end portions 912 and 922 of the respective rollers 91 and 92 are arranged on the same side. As a result, a gap 900 in which the first end portion 911, 921 side is narrow and the second end portion 912, 922 side is wide is formed between the rollers 91 and 92.

Therefore, when the pre-stretching interlayer film is caused to pass between the rollers 91 and 92, as shown in Fig. 4, a peripheral speed on the first end portion 911, 921 side of each of the rollers 91 and 92 is high, and therefore, the pre-stretching interlayer film is stretched on the first end portion 911, 921 side. As a result, the post-stretching interlayer film 3 having a trapezoidal shape in plan view is formed. As shown in Fig. 3, since the gap 900 between the rollers 91 and 92 is formed, the cross section of the stretched interlayer film 3 is thicker on the first end portion 911, 921 side and thinner on the second end portion 912, 922 side. As a result, the interlayer film 3 in which the upper end surface 311 is thick and the lower end surface 312 is thin is formed.

<4. Shielding layer>

As shown in Fig. 1, the shielding layer 4 is stacked on a ceramic with a dark color such as black on a peripheral edge of the windshield. The shielding layer 4 blocks the field of view from the inside or the outside of the vehicle, and is stacked along four sides of the windshield.

The shielding layer 4 can take various forms such as only an inner surface of the outer glass plate 1, only an inner surface of the inner glass plate 2, or the inner surface of the outer glass plate 1 and the inner surface of the inner glass plate 2. Although the shielding layer 4 can be formed of ceramics or various materials, for example, the following composition can be used.

[Table 1]

|  |  | First and second colored ceramic pastes |
|---|---|---|
| Pigment * 1 | mass% | 10 |
| Resin (cellulose resin) | mass% | 10 |
| Organic solvent (pine oil) | mass% | 10 |
| Glass binder *2 | mass% | 70 |
| Viscosity | dPs | 150 |
| * 1, Main component: copper oxide, chromium oxide, iron oxide, and manganese oxide<br>*2, Main component: bismuth borosilicate, zinc borosilicate | | |

Although the ceramic can be formed by a screen printing method, in addition to this method, the ceramic can also be produced by transferring a transfer film for firing to a glass plate and firing the transfer film. When screen printing is employed, for example, a polyester screen: 355 mesh, a coating thickness: 20 μm, a tension: 20 Nm, a squeegee hardness: 80 degrees, an attachment angle: 75°, and a printing speed: 300 mm/s can be set, and a ceramic can be formed by drying at 150°C for 10 minutes in a drying furnace.

<5. Method of manufacturing windshield>

Next, a method of manufacturing the windshield will be described. First, a production line of a glass plate will be described.

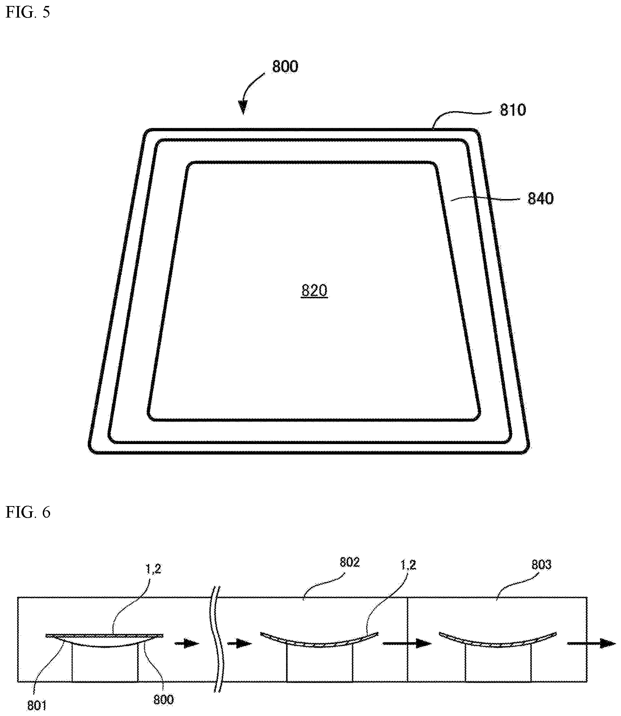

Here, a molding die will be described in more detail with reference to Fig. 5. Fig. 5 is a plan view of the molding die. As shown in Fig. 5, a molding die 800 includes a frame-shaped mold body 810 that substantially matches the outer shapes of the glass plates 1 and 2. Since the mold body 810 is formed in a frame shape, an internal space 820 penetrating in the vertical direction is provided inside. Peripheral edge portions of the flat glass plates 1 and 2 are placed on an upper surface of the mold body 810. Thus, heat is applied to the glass plates 1 and 2 from a heater (not shown) disposed on the lower side through the internal space. As a result, the glass plates 1 and 2 are softened by heating, and are curved downward by their own weight. A shielding plate 840 for blocking heat may be disposed on an inner peripheral edge of the mold body 810, whereby the heat received by the glass plates 1 and 2 can be adjusted. The heater can be provided not only below the molding die 800 but also above the molding die.

Next, a molding method will be described with reference to Fig. 6. Fig. 6 is a side view of a furnace through which the molding die passes. First, the shielding layer 2 described above is stacked on the outer glass plate 1 and the inner glass plate 2 before curving. Next, as shown in Fig. 6, the outer glass plate 1 and the inner glass plate 2 are made to overlap each other and pass through a heating furnace 802 in a state of being supported by the molding die 800. When heated to the vicinity of a softening point temperature in the heating furnace 802, an inner side of the peripheral edge portion of each of the glass plates 1 and 2 is curved downward by its own weight, and the glass plates 1 and 2 are formed into a curved shape. Subsequently, both the glass plates 1 and 2 are carried into an annealing furnace 803 from the heating furnace 802, and are subjected to annealing treatment. Thereafter, both the glass plates 1 and 2 are carried out from the annealing furnace 803 to the outside and cooled.

When the outer glass plate 1 and the inner glass plate 2 are formed in this way, the interlayer film 3 is interposed between the outer glass plate 1 and the inner glass plate 2 subsequently. The interlayer film 3 has a shape slightly larger than the outer glass plate 1 and the inner glass plate 2. As a result, an outer edge of the intermediate layer 3 protrudes from the outer glass plate 1 and the inner glass plate 2. An end portion of the interlayer film 3 on the side where the thickness is large is disposed on the upper side of both the glass plates 1 and 2.

Next, the laminate in which both the glass plates 1 and 2 and the interlayer film 3 are stacked is placed into a rubber bag, and preliminarily bonding is carried out at about 70°C to 110°C under vacuum suction. Preliminary bonding can be carried out using a method other than this method, and the following method can also be adopted. The laminate is heated in an oven at 45°C to 65°C, for example. Next, the laminate is pressed by a roll at 0.45 to 0.55 MPa. Subsequently, the laminate is heated in an oven again at 80°C to 105°C, and is then pressed again by a roll at 0.45 to 0.55 MPa.

Preliminary bonding is completed in this manner.

Then, permanent bonding is performed. The preliminarily bonded laminate is permanently bonded using an autoclave at a pressure of 8 to 15 atm and at 100°C to 150°C, for example. Specifically, permanent bonding can be performed under the conditions of 14 atm of pressure and a temperature of 135°C, for example. The interlayer film 3 is bonded to the glass plates 1 and 2 through preliminary bonding and permanent bonding described above. Finally, the interlayer film 3 protruding from the outer glass plate 1 and the inner glass plate 2 is cut off to manufacture a windshield having a cross section as shown in Fig. 2. That is, by using the interlayer film 3 having the wedge angle $\alpha$, a windshield having the wedge angle $\alpha$ is formed. A curved windshield can also be manufactured by a method other than this method, for example, press working.

<6. HUD device>

Next, an HUD device will be described. The HUD device projects information such as a vehicle speed on the windshield. However, it is known that when the HUD device is used, a double image is formed by light projected on the windshield. That is, since an image visually recognized by being reflected by an inner surface (second main surface) of the windshield and an image visually recognized by being reflected by an outer surface (first main surface) of the windshield are separately visually recognized, the images are doubled.

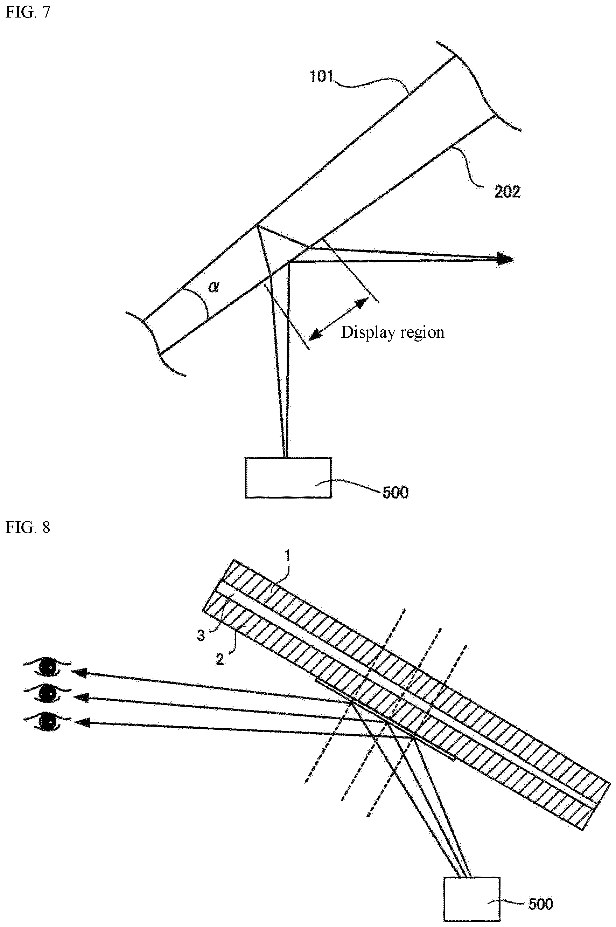

In order to prevent this, the windshield having the wedge angle $\alpha$ as in the present embodiment is used. That is, as shown in Fig. 7, in the windshield, at least the display region onto which light is projected from an HUD device 500 is formed such that the thickness decreases downward. As a result, light that is reflected off the inner surface of the windshield (the second surface 202 of the inner glass plate 2) and then enters the inside of the vehicle and light that is reflected off the outer surface of the windshield (the first surface 101 of the outer glass plate 1) and then enters the inside of the vehicle mostly match, and therefore, the double image is eliminated.

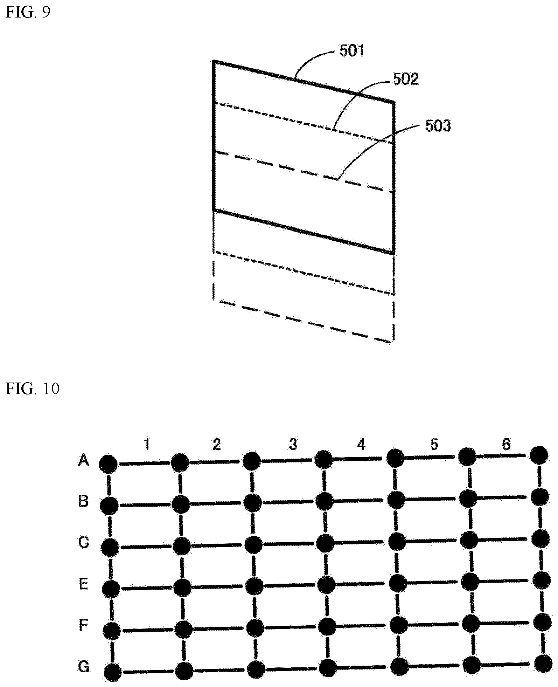

As shown in Figs. 8 and 9, the HUD device 500 according to the present embodiment can switch the display region in three stages in accordance with the height of the driver's eyes. That is, the display region can be switched by changing an irradiation angle of light from the HUD device 500 to the windshield. In this case, these three display regions are referred to as an upper region 501, a central region 502, and a lower region 503. The display regions 501 to 503 shown in Fig. 9 are viewed from the outside of the vehicle, and all have the same size. The three display regions 501 to 503 are aligned in the vertical direction and overlap each other. That is, a lower portion of the upper region 501 and an upper portion of the lower region 503 overlap, and the central region 502 is disposed between the upper region 501 and the lower region 503. Therefore, a region where the three regions 501 to 503 overlap is disposed inside the central region 502.

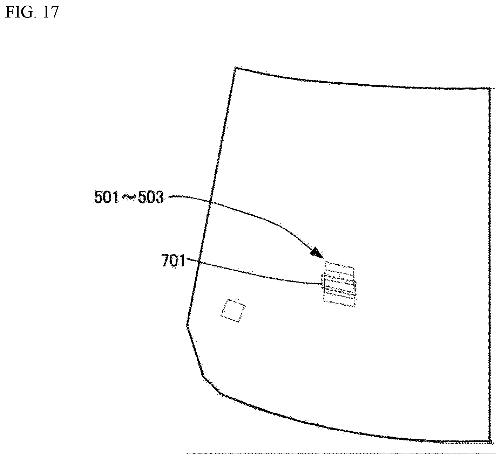

The display regions 501 to 503 are arranged on the right side of the windshield when viewed from the front. That is, the display regions 501 to 503 are arranged in front of the driver for a right-hand drive car (see Fig. 17). Since the windshield is curved in the horizontal direction as described above, when viewed from the front, as shown in Fig. 9, each of the display regions 501 to 503 is inclined such that the upper side and the lower side descend from the left to the right in accordance with the curve. In the windshield, a portion where the display regions 501 to 503 are provided is preferably a portion having a large radius of curvature in the horizontal direction and the vertical direction. For example, the portion is preferably near the center of the windshield in the horizontal direction and at a lower portion in the vertical direction.

<7. Relationship between display region and wedge angle>

The present inventor has studied a relationship between the above-described three display regions 501 to 503 and the wedge angle capable of suppressing the double image as follows.

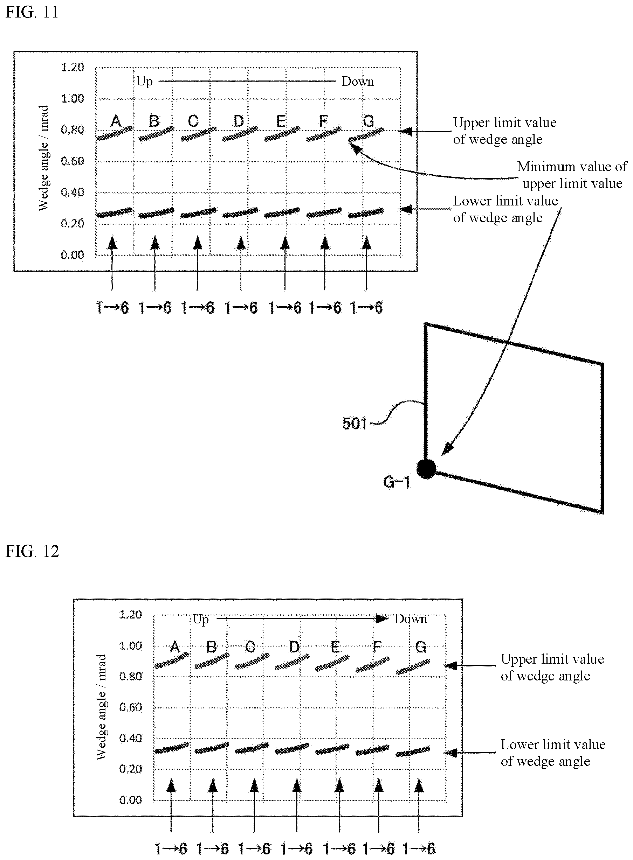

First, a lattice as shown in Fig. 10 was set in each of the display regions 501 to 503, and the double image was measured. The thickness of each of the outer glass plate 1 and the inner glass plate 2 was 2 mm, and the thickness at the thinnest portion of the interlayer film 3 was 0.76 mm. The lattice in Fig. 10 is viewed from the vehicle interior side. In this lattice, six points A to G are arranged in the vertical direction, and six lines 1 to 6 (36 lines in total) are arranged in the horizontal direction. A wedge angle range (allowable wedge angle) in which a shift amount due to the double images of 36 lines A-1 to G-6 in the lattice was within 2 mm was calculated by simulation. The results are as shown in Figs. 11 to 13.

The graph in Fig. 11 shows a simulation result in the upper region 501, where the horizontal axis indicates a position in the vertical direction of the windshield, and the vertical axis indicates the wedge angle. However, in Fig. 11, only upper limit values and lower limit values of the allowable wedge angles at the lines A-1 to G-6 are shown for convenience of description. According to Fig. 11, in columns A to G arranged in the vertical direction, the allowable wedge angle of the lines 1 to 6 increases from 1 to 6. That is, in the upper region 501, the range of the allowable wedge angle increases from the left side to the right side (pillar side) as viewed from the vehicle interior side. The range of the allowable wedge angle decreases from the column A to the column G arranged in the vertical direction. That is, in the upper region 501, the range of the allowable wedge angle decreases as it goes downward. In Fig. 11, the upper limit value of the allowable wedge angle is minimized at the position where a line G-1 is disposed.

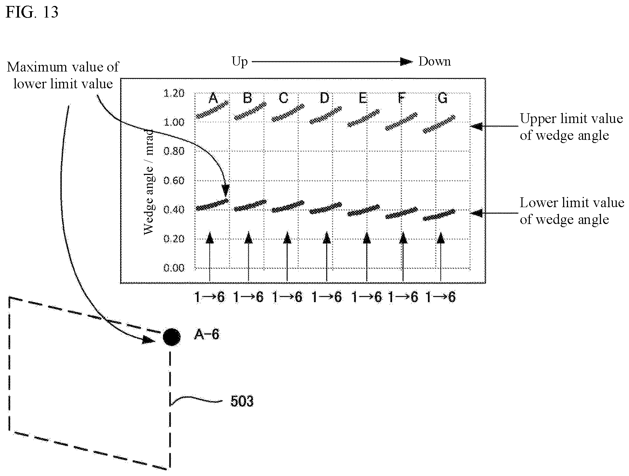

Fig. 12 shows simulation results in the central region, and Fig. 13 shows simulation results in the lower region. The central region 502 and the lower region 503 also show the same tendency as the upper region 501. In Fig. 13, the lower limit value of the allowable wedge angle is maximized at the position where a line A-6 is disposed.

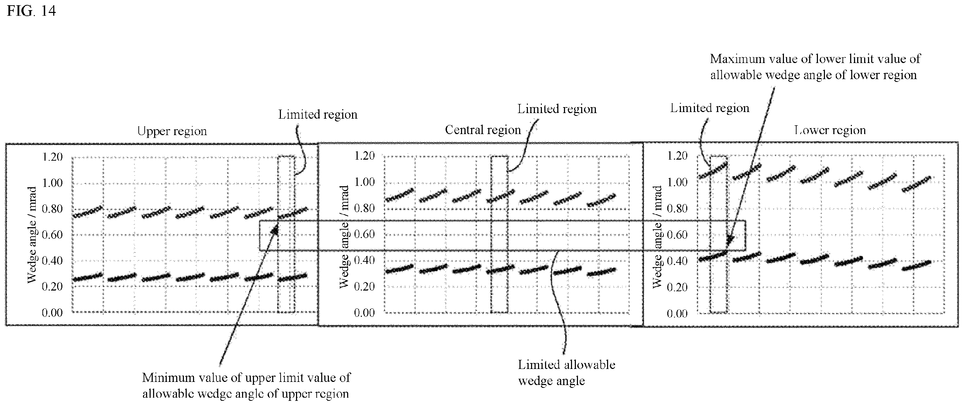

Fig. 14 is a view in which Figs. 11 to 13 are arranged. According to Fig. 14, it can be seen that the range of the allowable wedge angle increases from the upper region 501 to the lower region 503. Furthermore, according to Fig. 14, in the allowable wedge angle common to all the display regions 501 to 503, the upper limit is the wedge angle at the line G-1 in the upper region, and the lower limit is the wedge angle at the line A-6 in the lower region. Therefore, if the wedge angle is set within this range (hereinafter, referred to as the limited allowable wedge angle), the generation of the double image can be suppressed in all the display regions 501 to 503.

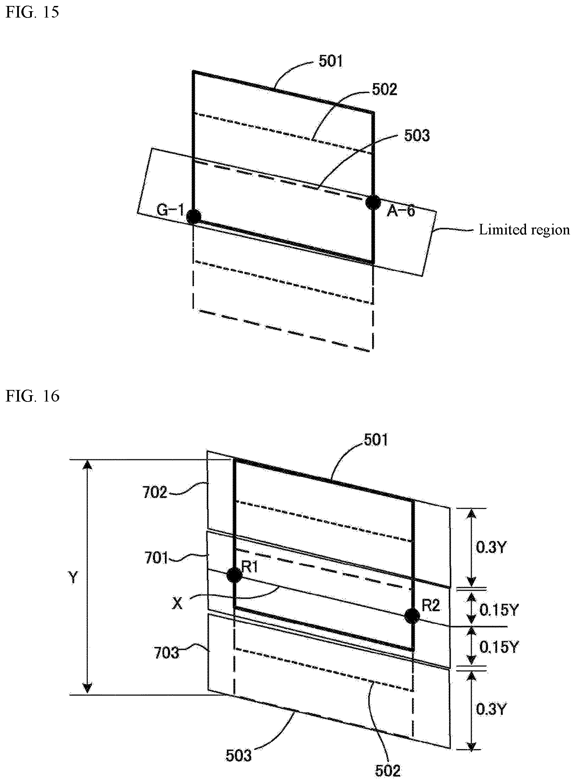

However, since the range of the limited allowable wedge angle is narrow, it is not easy to manufacture a windshield having such a wedge angle. As shown in Fig. 15, a region requiring the limited allowable wedge angle is a region including G-1 and A-6 in the vertical direction, and is a region where the three display regions 501 to 503 overlap (hereinafter, the region is referred to as the limited region). On the other hand, as shown in Fig. 14, in the upper region 501 and the lower region 503, the range of the allowable wedge angle is larger than the range of the limited allowable wedge angle. Therefore, in order to suppress the generation of the double image in all the display regions 501 to 503, it is not necessary to satisfy the limited allowable wedge angle in all the display regions 501 to 503, and it is sufficient that the limited allowable wedge angle is satisfied at least in the limited region. Thus, the present inventor sets the allowable wedge angle as follows.

First, as shown in Fig. 16, a length in the vertical direction of a region including all the display regions 501 to 503 (hereinafter, the region is referred to as the entire display region) is defined as Y. Next, a line X passing through midpoints R1 and R2 of both sides of the entire display region is defined, a line parallel to the line X and 0.15 Y away from the line X in an upward direction and a line 0.15 Y away from the line X in a downward direction are defined, and a region therebetween is defined as a first region 701. A region between a line passing through an upper side of the entire display region and a line parallel to the upper side and 0.3 Y away from the upper side in the downward direction is defined as a second region 702. In addition, a region between a line passing through a lower side of the entire display region and a line parallel to the lower side and 0.3 Y away from the lower side in the upward direction is defined as a third region 703.

Assuming that the ranges of the allowable wedge angles in the first region 701, the second region 702, and the third region 703 are S_Center, S_Upper, and S_Lower, respectively, it has been found that these ranges may satisfy the following Formulas (1) and (2).

$$S\_Center < S\_Upper \qquad (1)$$

$$S\_Center < S\_Lower \qquad (2)$$

Fig. 17 is a view showing a left side of the windshield as viewed from the outside of the vehicle. In order to satisfy the above Formulas (1) and (2), the wedge angle of at least a portion of the interlayer film 3 disposed in the first region 701 may be strictly controlled. That is, the wedge angle of the interlayer film 3 at this portion may be at S_Center. On the other hand, since the wedge angles of the second region 702 and the third region 703 are ranges wider than S_Center, strict control becomes unnecessary. The interlayer film 3 originally has a variation in film thickness, and this variation causes undulation on the surface of the interlayer film 3. The undulation remains even after the windshield is assembled. Therefore, for example, when the windshield is assembled such that a portion having the smallest undulation is disposed in the first region 701 in the interlayer film 3, the above Formulas (1) and (2) can be satisfied.

In the above simulation, for example, the height of each of the display regions 501 to 503 is about 120 mm, the width is about 100 mm, a vertical height of a portion where the upper region 501 and the lower region 503 overlap is about 64 mm, and Y is about 177 mm. In this case, S_Center can be, for example, 0.05 mrad or more and 0.10 mrad or less as a specific allowable wedge angle range in which the shift amount due to the double image is within 2 mm. S Upper can be, for example, 0.15 mrad or more and 0.45 mrad or less. S_Lower can be, for example, 0.20 mrad or more and 0.55 mrad or less. However, these are merely examples, and at least the above Formulas (1) and (2) may be satisfied.

In the above example, the upper limit value of the shift amount due to the double image is 2 mm, but is not particularly limited, and can be appropriately set according to a request. Thus, if a windshield satisfying the above Formulas (1) and (2) can be produced according to the set upper limit value regardless of the upper limit value of the shift amount of the double image, the double image can be suppressed.

When the wedge angle is actually measured, a plurality of lattice points having a pitch of 20 mm or less are defined in each of the regions 701 to 703. Although the number of lattice points depends on the size of each of the regions 701 to 703, a maximum number of lattice points entering each of the regions 701 to 703 is set. The wedge angle of each lattice point is measured by an interferometer, and differences between a maximum value and a minimum value of the allowable wedge angle in each of the regions 701 to 703 are defined as S_Center, S_Upper, and S_Lower, respectively. Alternatively, the horizontal direction of each of the regions 701 to 703 is cut in the height direction so as to be divided into approximately five equal parts, for each cross section obtained by the cutting, three points may be selected so as to have uniform intervals in each of the regions 701 to 703, and the height may be measured with a microscope to obtain the wedge angle.

<8. Features>

As described above, with the windshield according to the present embodiment, it is possible to suppress the double image in all the three display regions 501 to 503. At this time, in the interlayer film 3, it is not necessary to strictly control the wedge angles of portions arranged in all the display regions 501 to 503, the wedge angle of the interlayer film 3 can be strictly controlled only in a portion where the first region 701 having a narrowest allowable wedge angle range is disposed, and the control of the wedge angle of the interlayer film 3 can be loosened in the other regions 702 and 703 as compared with the first region 701; therefore, the production is easy.

<9. Modification>

While one embodiment of the present invention has been described above, the invention is by no means limited to the foregoing embodiment, and various modifications are possible without departing from the gist of the invention. A plurality of modifications described below can be appropriately combined.

<9-1>
In the above embodiment, the HUD device 500 capable of switching the display region in three stages has been described as an example; however, even when the HUD device 500 capable of switching the display region in two stages or four or more stages other than three stages is used, if the above Formulas (1) and (2) are satisfied, the double image can be suppressed in all the display regions.

<9-2>
In the above embodiment, although the interlayer film 3 is formed in a wedge shape, since the windshield may be formed in a wedge shape as a whole, at least one of the outer glass plate 1, the inner glass plate 2, and the interlayer film 3 may be formed in a wedge shape.

<9-3>
The shape of the shielding layer 4 is not particularly limited, and various shapes are possible. For example, it is also possible to form a shielding layer provided with a window (opening) so that irradiation with light by a sensor and taking of an image of the outside by a camera can be performed.

<9-4>
In the above embodiment, laminated glass having the outer glass plate 1, the inner glass plate 2, and the interlayer film 3 is used as the glass plate of the present invention; however, the glass plate is not limited to this laminated glass, and a single plate may be used.

DESCRIPTION OF REFERENCE SIGNS

2: Imaging capturing device
10: Glass plate
110: Shielding layer
113: Shooting window (opening)

**Claims**

1.  A windshield including an HUD device switching a plurality of display regions in a vertical direction,

the windshield comprising a glass plate which has a first main surface and a second main surface opposite from the first main surface and in which the display region is formed, wherein

the glass plate is configured such that an upper end portion is formed so as to have a greater thickness than a lower end portion, and the first main surface and the second main surface form a wedge angle $\alpha$; and

S_Center < S_Upper and S_Center < S_Lower are satisfied,

where Y is a vertical height in the entire display region including all the plurality of display regions,

S_Center is a range of the wedge angle $\alpha$ in a first region between a line 0.15 Y upward away and a line 0.15 Y downward away from a line passing through a vertical center of both sides of the entire display region,

S Upper is a range of the wedge angle $\alpha$ in a second region between an upper side of the entire display region and a line 0.3 Y downward away from the upper side, and

S_Lower is a range of the wedge angle $\alpha$ in a third region between a lower side of the entire display region and a line 0.3 Y upward away from the lower side.

2. The windshield according to claim 1, wherein the plurality of display regions overlap in a vertical direction.

3. The windshield according to claim 1 or 2, which is curved so as to be convex outward from a vehicle in a horizontal direction.

4. The windshield according to claim 3, further comprising a plurality of regions having different radii of curvature in the horizontal direction, wherein
the display region is provided in a region having a large radius of curvature in the horizontal direction.

5. The windshield according to any one of claims 1 to 4, which is curved so as to be convex outward from the vehicle in the vertical direction.

6. The windshield according to claim 5, further comprising a plurality of regions having different radii of curvature in the vertical direction, wherein
the display region is provided in a region having a large radius of curvature in the vertical direction.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

501~503

701

## INTERNATIONAL SEARCH REPORT

| International application No. |
| --- |
| **PCT/JP2022/025397** |

### A. CLASSIFICATION OF SUBJECT MATTER

***B60J 1/00***(2006.01)i; ***B60J 1/02***(2006.01)i; ***G02B 27/01***(2006.01)i
FI:    B60J1/02 M; B60J1/00 H; G02B27/01

According to International Patent Classification (IPC) or to both national classification and IPC

### B. FIELDS SEARCHED

Minimum documentation searched (classification system followed by classification symbols)

B60J1/00; B60J1/02; G02B27/01

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2009-035444 A (NIPPON SHEET GLASS CO., LTD.) 19 February 2009 (2009-02-19) entire text, all drawings | 1-6 |
| A | JP 2020-015491 A (AGC INC.) 30 January 2020 (2020-01-30) entire text, all drawings | 1-6 |
| A | JP 2020-173291 A (CENTRAL GLASS CO., LTD.) 22 October 2020 (2020-10-22) entire text, all drawings | 1-6 |

☐ Further documents are listed in the continuation of Box C.     ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **09 August 2022** | **13 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/025397**

| Patent document cited in search report | | | Publication date (day/month/year) | Patent family member(s) | Publication date (day/month/year) |
|---|---|---|---|---|---|
| JP | 2009-035444 | A | 19 February 2009 | (Family: none) | |
| JP | 2020-015491 | A | 30 January 2020 | (Family: none) | |
| JP | 2020-173291 | A | 22 October 2020 | (Family: none) | |

Form PCT/ISA/210 (patent family annex) (January 2015)

**REFERENCES CITED IN THE DESCRIPTION**

**Patent documents cited in the description**

- JP 6770470 B